# EUROPEAN PATENT SPECIFICATION

(11) **EP 2 942 492 B1**
(45) Date of publication and mention of the grant of the patent: **26.09.2018**
(21) Application number: 14167063.8
(22) Date of filing: 05.05.2014
(51) Int. Cl.: F01K 3/12, F01K 13/00, F25B 30/02, F28D 20/00, F25B 6/04, F25B 11/02, F25B 25/00, F25B 40/00

(54) **Electrical energy storage and discharge system**
System zum Speichern und Abgeben von elektrischer Energie
Système de stockage et de décharge d'énergie électrique

(43) Date of publication of application: 11.11.2015
(73) Proprietor: General Electric Technology GmbH, 5400 Baden (CH)
(72) Inventor: Malpiece, Damien, 5430 Wettingen (CH); Montresor, Paolo, 8965 Berikon (CH); Aga, Vipluv Kamalesh, 8050 Zuerich (CH); Nikulshyna, Viktoria, 8052 Zuerich (CH)
(74) Representative: Brannen, Joseph Waclaw

(56) References cited:
- EP-A1- 2 275 649
- WO-A1-2013/135718
- WO-A1-2014/052927
- WO-A2-2010/006942

## Description

### TECHNICAL FIELD

The present disclosure relates generally to electrical energy storage and discharge systems with thermal storage and more particularly to electrical energy storage system with heat pump charging cycles that use thermal fluids to store energy.

### BACKGROUND INFORMATION

Renewables (wind, solar) are intermittent sources of power generation and therefore these systems require cost-effective energy storage and recovery systems to match demand with generation.

A method of converting electrical energy into thermal energy uses the concept of a heat pump that typically involves the use of a reversible vapour or supercritical fluid compression cycle. A characteristic of a heat pump cycle is able to absorb heat from low T heat source and give it back at high temperature for heat sink. To do this requires an external energy source such as electricity. The advantage of the system is that most of the energy comes from the external environment thus enabling such systems to achieve heat transfer rates three or four times larger than the electrical power consumed.

A heat pump cycle typically includes four major components, a condenser, an expansion valve, an evaporator, and a compressor. While heat pumps typically use a refrigerant working fluid to absorb heat where it vaporizes, in an evaporator, and then to release the heat after compression in a condenser, the heat pump may be operated with a working fluid completely or partially in a supercritical state.

Such heat pump cycles may be used to store the electricity used to operate the compressor as thermal energy. For example EP 2602443 describes an energy storage system that uses two thermal energy storage systems to store thermal energy extracted from the working fluid of a heat pump cycle in the high pressure phase of the heat pump cycle between the compression and expansion phases. In this arrangement, the first thermal energy store arrangement has an upper operating temperature and a lower operating temperature while the second thermal energy store arrangement has an upper operating temperature and a lower operating temperature in which the upper operating temperature is less than or equal to the lower operating temperature of the first thermal energy store arrangement. The first thermal energy store arrangement may use molten salt as the thermal energy storage medium whilst the second thermal energy store arrangement may use pressurised water as the thermal energy storage medium.

WO2010/006942A2 discusses a thermoelectric energy storage system comprising a charging heat pump cycle and a discharging steam cycle, wherein the cycles are linked via a series of thermal fluid energy storage tanks that are configured as intermediate energy storage means for the charging and discharging cycle.

WO2013/135718 A1 discusses an energy storage power plant with a temporary thermal energy storage means comprising at least two thermal stores for storing the energy content of water in a water circuit. Each of the stores comprises at least one converting device that allows electric energy to be directly or indirectly converted into thermal energy. One thermal store is provided for storing sensible heat while another thermal store is provided for storing latent heat.

### SUMMARY

An alternate energy storage and discharge system is disclosed which can provide efficient and flexible thermal storage and discharge phase for electricity generation.

Embodiments of the system address this problem by means of the subject matters of the independent claim while advantageous embodiments are given in the dependent claims.

The disclosure is based on the general idea of integrating heat generated during a charging cycle into a preheating path so as to minimise temperature difference and maximise heat recovery in a discharging cycle by using high and low temperature storage that are integrated into a water steam discharge cycle .

The use of a higher and lower temperature storage systems maximises the temperature range and hence the thermal energy that can be extracted from the heat pump cycle. While the adaption of the two storage system to a water steam cycle enables water to be efficiently preheated by the lower temperature system thus reducing steam extraction requirements and thus maximising the Rankine efficiency of the water steam cycle.

An Electrical Energy Storage and Discharge System for storing electrical energy as thermal energy according to the invention as defined by appended independent claim 1 inter alia comprises a heat pump cycle, having a working fluid and high and low pressure sides. The heat pump cycle further comprises a first thermal storage system with a first thermal fluid, and a second thermal storage system with a second thermal fluid.

The heat pump cycle has a first cooler, on the high pressure side, for cooling working fluid and a second cooler, on the high pressure side downstream of the first cooler, for sequential cooling of the working fluid.

The first thermal storage system has a first thermal fluid and comprises a first cold storage tank and a first hot storage tank that is fluidly connected to the first cold storage tank by means of a first fluid line passing through the first cooler so as enable the heating of the first thermal fluid by the working fluid. The second thermal storage system has a second thermal fluid and comprises a second cold storage tank and a colder hot storage tank fluidly connected to the second cold storage tank by a third fluid line passing through the second cooler so as enable the heating of the second thermal fluid by the working fluid. The water steam cycle has a steam turbine for expanding steam, a condenser, a first water heater downstream of the condenser and a boiler for converting water of the cycle into superheated steam, and a steam boiler. A second fluid line passes through the boiler and further fluidly connects the first hot storage tank to the first cold storage tank while a fourth fluid line passes through the first water heater and further fluidly connects the second hot storage tank to the second cold storage tank.

In addition a heater is located in the low pressure side, such that the third fluid line passes through the heater.

In a further aspect the steam turbine is a multi-stage steam turbine with an extraction line configured and arranged to extract steam from the steam turbine from an intermediate stage wherein the extraction line is connected a second water heater located in the water steam cycle downstream of the first water heater so as enable further heating of water in the water steam cycle with extraction steam.

In an aspect the heat pump cycle is one of a selection of a transcritical heat pump cycle and a supercritical heat pump cycle in which the working fluid is in a supercritical state throughout the cycle.

In an aspect the first thermal fluid is molten salt.

In an aspect the second thermal fluid is water and in a further aspect pressurised water.

In further aspects, the second thermal fluid is oil and in a yet further aspects synthetic oil or mineral oil.

In a further aspect, the system comprises a compressor and a recuperator, wherein the recuperator is located on the high pressure side of the heat pump cycle between the first cooler and second cooler and on the low pressure side of the heat pump cycle between the compressor and the heater, and wherein the compressor is upstream of the first cooler. In a further aspect, the system comprises an expander between the second cooler and the heater.

It is a further object of the invention to overcome or at least ameliorate the disadvantages and shortcomings of the prior art or provide a useful alternative.

Other aspects and advantages of the present disclosure will become apparent from the following description, taken in connection with the accompanying drawings which by way of example illustrate exemplary embodiments of the present invention

### BRIEF DESCRIPTION OF THE DRAWINGS

By way of example, an embodiment of the present disclosure is described more fully hereinafter with reference to the accompanying drawing, in which:

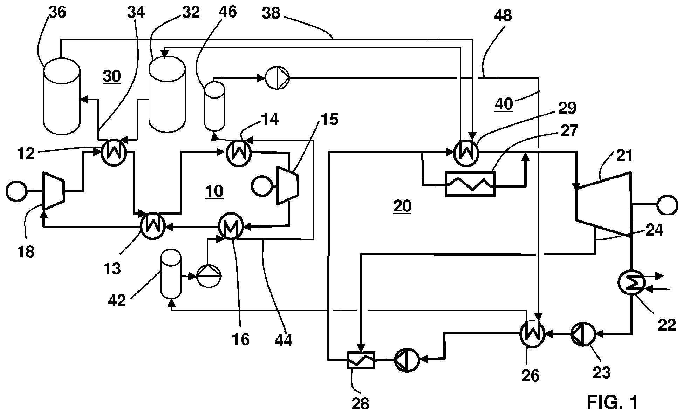

Figure 1 is a schematic of an Electrical energy storage system according to a preferred embodiment of the disclosure that incorporates a heat pump cycle and a water steam cycle the use of higher and lower temperature thermal storage systems.

### DETAILED DESCRIPTION

Exemplary embodiments of the present disclosure are now described with references to the drawing, wherein like reference numerals are used to refer to like elements throughout. In the following description, for purposes of explanation, numerous specific details are set forth to provide a thorough understanding of the disclosure. However, the present disclosure may be practiced without these specific details, and is not limited to the exemplary embodiment disclosed herein.

Instead, the invention is defined by appended claims. An exemplary embodiment shown in Fig. 1 compromises in its simplest form, a heat pump cycle 10, a water steam cycle 20 and a warmer thermal storage system 30 and a colder thermal storage system 40 interconnecting the heat pump cycle 10 and the water steam cycle 20 respectively. In this arrangement, the heat pump cycle 10 acts as a charging system for converting electrical energy used to drive the compressor 18 of the heat pump cycle 10 into thermal energy that is storage in the warmer thermal storage system 30 and the colder thermal storage system 40 wherein the water steam cycle 20 is a discharge system for converting thermal energy storage in the warmer thermal storage system 30 and colder thermal storage system 40 to electricity by using the steam turbine 21 to drive a generator.

The heat pump cycle 10 may compromise any known heat pump cycle 10 including cycles configured as subcritical, transcritical and supercritical cycles. In an exemplary embodiment shown in Fig. 1, the heat pump cycle 10 includes a compressor 18 for compressing a working fluid, first 12 and second condenser/ coolers 14 arranged in series downstream of the compressor 18, an expander 15 downstream of the condenser/ coolers 12, 14, and a evaporator/ heater 16 fluidly located between the expander 15 and the compressor 18 on the low pressure side of the heat pump cycle 10.

In an exemplary embodiment shown in Fig. 1, a recuperator 13 is fluidly located on the high pressure side of the heat pump cycle 10 between the first 12 and second condenser/ coolers 14 and on the low pressure side of the heat pump cycle 10 between the compressor 18 and evaporator/ heater 16. In this location the recuperator 13 transfers thermal energy from high pressure working fluid to the lower pressure working fluid.

In an exemplary embodiment shown in Fig. 1, the water steam cycle 20 sequentially comprises a steam turbine 21, a condenser 22 for condensing steam exhausted of the steam turbine 21, a condensate pump 23 for pressuring condensed water, a first water heater 26 for heating condensate using stored thermal energy and a first boiler 29 for generating steam in the cycle to be returned to the steam turbine 21.

In an exemplary embodiment shown in Fig. 1, the steam turbine 21 is a multistage steam turbine 21 and the water steam circuit includes a second water heater 28 for heating condensate with steam extracted via an extraction steam line 24. A further second boiler 27 is located downstream of the second water heater 28 preferably fluidly parallel to the first boiler 29. Both the second water heater 28 and the second boiler can be used to provide supplementary energy input in the water steam cycle 20 or else operate the water steam cycle 20 in the absence of heat input from either or both of the warmer thermal storage system 30 and the colder thermal storage system 40.

In an exemplary embodiment shown in Fig. 1, the warmer thermal storage system 30 comprises a warmer cold storage tank 32 and a warmer hot storage tank 36 that are fluidly connected by means of a first fluid line 34 passing through the first cooler 12. A second fluid line 38 connects the warmer hot storage tank 36 to the warmer cold storage tank 32 via the first steam boiler 29. In this way, thermal energy from the warmer hot storage tank 36 can be used as an energy source in the water steam cycle 20. Although, in an exemplary embodiment the warmer hot storage tank 36 may be configured to only hold thermal fluid, in another exemplary embodiment, the warmer hot storage tank 36 additionally includes heat retention means such as heat absorbant metal, rocks or other minerals that enable the long term retention of heat.

In an exemplary embodiment shown in Fig. 1, the colder thermal storage system 40 comprises a colder cold storage tank 42 and a colder hot storage tank 46 fluidly connected by means of a third fluid line 44 passing through the second cooler 14. A fourth fluid line 48 further connects the colder hot storage tank 46 to the colder cold storage tank 42 via the first water heater 26 of the water steam cycle 20. In this way, thermal energy from the colder hot storage tank 46 can be used as an energy source in the water steam cycle 20. Although, in an exemplary embodiment the colder hot storage tank 46 may be configured to only hold thermal fluid, in another exemplary embodiment, the colder hot storage tank 46 additionally includes heat retention means such as heat absorbent metal, rocks or other minerals that enable the long term retention of heat.

An exemplary method of a charging cycle using a transcritical working fluid involves the following steps. Firstly a compressor 18 compresses a working fluid of a heat pump cycle 10 to a supercritical state in order to reach the highest temperature allowed by the first storage medium which is recovered by a first cooler 12 located downstream of the compressor 18. In a following recuperating step, cooled high pressure working fluid is used to preheat low pressure working fluid in a recuperator 13 so as to limit the outlet pressure of compressor 18. Afterwards, low grade heat of the high pressure working fluid is recovered in a second cooler 14 fluidly connected to a colder thermal storage system 40. Typically, in this step, the working fluid undergoes a transcritical change in state from a supercritical state to a subcritical stage. Once further cooled working fluid is expanded in an expander 15 that throttles the pressure of the working fluid to a lower pressure. The working fluid is then evaporated/preheated and heated before being returned to the compressor 18. This heating and evaporation step may be achieved by using heat from the environment or else heat from the colder thermal storage system 40 in an arrangement where colder thermal fluid is first passed from the colder cold storage tank 42 through the evaporator / heater 16 via the third fluid line 44 before passing through the second cooler 14 and into the colder hot storage tank 46.

An exemplary operating method for a discharge cycle involves the following steps. Colder thermal fluid from the colder hot storage tank 46 is used to heat water in a first water heater 26 of the water steam cycle 20 before it is returned to the colder cold storage tank 42 via fourth fluid line 48. The colder thermal fluid is then stored in colder cold storage tank 42 for the charging phase. To provide additional heat input into the water steam cycle 20, after heating of water in the first water heater 26 extraction steam from extraction line 25 may be used to further heat the water in a downstream second water heater 28. This enables further pre-warming of water before it enters either a first boiler 29, whose energy sourced is a warmer thermal storage system 30 or else a second boiler 27 have an external energy source. When the first boiler 29 is used, the energy source of the warmer thermal storage system 30 is thermal fluid from a warmer hot storage tank 36 that is returned to a warmer colder storage tank 32. The now heated steam at high pressure and in a supercritical state is expanded in a steam turbine 21 until a saturation pressure above the condensation temperature is reached. Steam exiting the steam turbine 21 is then condensed in a condenser 22 and then pressured in the condensate pump 23.

While thermal fluids and the working fluid of the heat pump may be adapted to meet the requirements of the system, in an exemplary embodiment the warmer thermal fluid is molten salt (60% NaNO3 40% KNO3) operated at a temperature range of between 270°C to 565°C and having a freezing point 238°C while the colder thermal fluid is water, more preferably pressurised water. As the same time the working fluid is CO2 selected for transcritical charging cycle due to appropriate physical properties which include non-flammability, non-degradation at the highest temperature and potential to be compressible up to 1000 bar. Alternatives, the working fluid may be air

Although the disclosure has been herein shown and described in what is conceived to be the most practical exemplary embodiment, it will be appreciated by those skilled in the art that the present disclosure can be embodied in other specific forms. The presently disclosed embodiments are therefore considered in all respects to be illustrative and not restricted. The scope of the disclosure is indicated by the appended claims rather that the foregoing description and all changes that come within the meaning thereof are intended to be embraced therein.

### REFERENCE NUMBERS

- 10: heat pump cycle
- 12: first cooler
- 13: recuperator
- 14: second cooler
- 15: expander
- 16: heater/evaporator
- 18: compressor
- 20: water steam cycle
- 21: steam turbine
- 22: condenser
- 23: condensate pump
- 24: extraction steam
- 26: first water heater
- 27: second boiler
- 28: second water heater
- 29: first steam boiler
- 30: warmer thermal storage system
- 32: warmer cold storage tank
- 34: first fluid line
- 36: warmer hot storage tank
- 38: second fluid line
- 40: colder thermal storage system
- 42: colder cold storage tank
- 44: third fluid line
- 46: colder hot storage tank
- 48: fourth fluid line

## Claims

1. An Electrical Energy Storage and Discharge system for storing electrical energy as thermal energy, comprising:
a heat pump cycle (10), having a working fluid, a high pressure side and a low pressure side, the heat pump cycle (10) having:
a first cooler (12), on the high pressure side, for cooling the working fluid; and
a second cooler (14), on the high pressure side, downstream of the first cooler (12), for sequential cooling of the working fluid
a first thermal storage system (30), with a first thermal fluid, comprising
a first cold storage tank (32)
a first hot storage tank (36) fluidly connected to the first cold storage tank (32) by means of a first fluid line (34) passing through the first cooler (12) so as enable the heating of the first thermal fluid by the working fluid; and
a second thermal storage system (40), with a second thermal fluid, comprising:
a second cold storage tank (42);
a second hot storage tank (46) fluidly connected to the second cold storage tank (42) by a third fluid line (44) passing through the second cooler (14) so as enable the heating of the second thermal fluid by the working fluid,
a water steam cycle (20) having:
a steam turbine (21) for expanding steam;
a first water heater (26) downstream of the steam turbine (21);
a boiler (29) downstream of the first water heater (26) for converting water of the cycle into steam;
a second fluid line (38) passing through the steam boiler (29) and further fluidly connecting the first hot storage tank (36) to the first cold storage tank (32); and
a fourth fluid line (48) passing through the first water heater (26) and further fluidly connecting the second hot storage tank (46) to the second cold storage tank (42), **characterised by**,
a heater (16), on the low pressure side, wherein the third fluid line (44) passes through the heater (16).

2. The Electrical Energy Storage and Discharge system of claim 1 wherein the steam turbine (21) is a multi-stage steam turbine (21) with an extraction line (24) configured and arranged to extract steam from the steam turbine (21) from an intermediate stage wherein the extraction line (24) is connected a second water heater (28) located in the water steam cycle (20) downstream of the first water heater (26) so as to enable further heating of water in the water steam cycle (20) with extraction steam.

3. The Electrical Energy Storage and Discharge system of claim 1 wherein the heat pump cycle (10) is a transcritical heat pump cycle (10).

4. The Electrical Energy Storage and Discharge system of claim 1 wherein the heat pump cycle (10) is a supercritical heat pump cycle (10) wherein the working fluid is in a supercritical state throughout the cycle.

5. The Electrical Energy Storage and Discharge system of claim 1 wherein the first thermal fluid is molten salt.

6. The Electrical Energy Storage and Discharge system of claim 1 wherein the second thermal fluid is water.

7. The Electrical Energy Storage and Discharge system of claim 6 wherein the second thermal fluid is pressured water.

8. The Electrical Energy Storage and Discharge system of claim 1 wherein the second thermal fluid is oil.

9. The Electrical Energy Storage and Discharge system of claim 8 wherein the second thermal fluid is a synthetic oil.

10. The Electrical Energy Storage and Discharge system of claim 8 wherein the second thermal fluid is a mineral oil.

11. The Electrical Energy Storage and Discharge system of any one of claims 1 to 10, comprising a compressor (18) and a recuperator (13), wherein the recuperator (13) is located on the high pressure side of the heat pump cycle (10) between the first cooler (12) and second cooler (14) and on the low pressure side of the heat pump cycle 10 between the compressor (18) and the heater (16), and wherein the compressor is upstream of the first cooler (12).

12. The Electrical Energy Storage and Discharge system of any one of claims 1 to 11, comprising an expander (15) between the second cooler (14) and the heater (16).

## Patentansprüche

1. System zur Speicherung und Abgabe von elektrischer Energie zum Speichern von elektrischer Energie als Wärmeenergie, umfassend:
einen Wärmepumpenkreislauf (10) mit einem Arbeitsfluid, einer Hochdruckseite und einer Niederdruckseite, der Wärmepumpenkreislauf (10) mit:
einer ersten Kühlvorrichtung (12), auf der Hochdruckseite, zum Kühlen des Arbeitsfluides; und
einer zweiten Kühlvorrichtung (14), auf der Niederdruckseite, stromabwärts der ersten Kühlvorrichtung (12), zum sequentiellen Kühlen des Arbeitsfluides,
ein erstes Wärmespeichersystem (30), mit einem ersten Wärmefluid, umfassend einen ersten Kaltspeichertank (32)
einen ersten Heißspeichertank (36), der mit dem ersten Kaltspeichertank (32) über eine erste Fluidleitung (34), die durch die erste Kühlvorrichtung (12) verläuft, fluidverbunden ist, um die Erwärmung des ersten Wärmefluides durch das Arbeitsfluid zu ermöglichen; und
ein zweites Wärmespeichersystem (40), mit einem zweiten Wärmefluid, umfassend:
einen zweiten Kaltspeichertank (42);
einen zweiten Heißspeichertank (46), der mit dem zweiten Kaltspeichertank (42) über eine dritte Fluidleitung (44), die durch die zweite Kühlvorrichtung (14) verläuft, fluidverbunden ist, um die Erwärmung des zweiten Wärmefluides durch das Arbeitsfluid zu ermöglichen,
einen Wasserdampfkreislauf (20) mit:
einer Dampfturbine (21) zum Expandieren von Dampf;
einem ersten Wasserheizgerät (26) stromabwärts der Dampfturbine (21);
einem Heizkessel (29) stromabwärts des ersten Wasserheizgerätes (26) zum Umwandeln von Wasser des Kreislaufes in Dampf;
eine zweite Fluidleitung (38), die durch den Dampfheizkessel (29) verläuft und den ersten Heißspeichertank (36) mit dem ersten Kaltspeichertank (32) weiter fluidverbindet; und
eine vierte Fluidleitung (48), die durch das erste Wasserheizgerät (26) verläuft und den zweiten Heißspeichertank (46) mit dem zweiten Kaltspeichertank (42) weiter fluidverbindet, **gekennzeichnet durch**
ein Heizgerät (16), auf der Niederdruckseite, wobei die dritte Fluidleitung (44) durch das Heizgerät (16) verläuft.

2. System zur Speicherung und Abgabe von elektrischer Energie nach Anspruch 1, wobei die Dampfturbine (21) eine mehrstufige Dampfturbine (21) mit einer Entnahmeleitung (24) ist, die konfiguriert und angeordnet ist, um Dampf aus der Dampfturbine (21) aus einer Zwischenstufe zu entnehmen, wobei die Entnahmeleitung (24) mit einem zweiten Wasserheizgerät (28) verbunden ist, das sich in dem Wasserdampfkreislauf (20) stromabwärts des ersten Wasserheizgerätes (26) befindet, um eine weitere Erwärmung von Wasser in dem Wasserdampfkreislauf (20) mit Entnahmedampf zu ermöglichen.

3. System zur Speicherung und Abgabe von elektrischer Energie nach Anspruch 1, wobei der Wärmepumpenkreislauf (10) ein transkritischer Wärmepumpenkreislauf (10) ist.

4. System zur Speicherung und Abgabe von elektrischer Energie nach Anspruch 1, wobei der Wärmepumpenkreislauf (10) ein superkritischer Wärmepumpenkreislauf (10) ist, wobei sich das Arbeitsfluid während des gesamten Zyklus in einem superkritischen Zustand befindet.

5. System zur Speicherung und Abgabe von elektrischer Energie nach Anspruch 1, wobei das erste Wärmefluid Salzschmelze ist.

6. System zur Speicherung und Abgabe von elektrischer Energie nach Anspruch 1, wobei das zweite Wärmefluid Wasser ist.

7. System zur Speicherung und Abgabe von elektrischer Energie nach Anspruch 6, wobei das zweite Wärmefluid unter Druck gesetztes Wasser ist.

8. System zur Speicherung und Abgabe von elektrischer Energie nach Anspruch 1, wobei das zweite Wärmefluid Öl ist.

9. System zur Speicherung und Abgabe von elektrischer Energie nach Anspruch 8, wobei das zweite Wärmefluid ein synthetisches Öl ist.

10. System zur Speicherung und Abgabe von elektrischer Energie nach Anspruch 8, wobei das zweite Wärmefluid ein Mineralöl ist.

11. System zur Speicherung und Abgabe von elektrischer Energie nach einem der Ansprüche 1 bis 10, das einen Verdichter (18) und einen Rekuperator (13) umfasst, wobei sich der Rekuperator (13) auf der Hochdruckseite des Wärmepumpenkreislaufs (10) zwischen der ersten Kühlvorrichtung (12) und der zweiten Kühlvorrichtung (14) und auf der Niederdruckseite des Wärmepumpenkreislaufs (10) zwischen dem Verdichter (18) und dem Heizgerät (16) befindet und wobei der Verdichter stromaufwärts der ersten Kühlvorrichtung (12) ist.

12. System zur Speicherung und Abgabe von elektrischer Energie nach einem der Ansprüche 1 bis 11, das einen Expander (15) zwischen der zweiten Kühlvorrichtung (14) und dem Heizgerät (16) umfasst.

## Revendications

1. Système de stockage et de décharge d'énergie électrique destiné à stocker de l'énergie électrique en tant qu'énergie thermique, comprenant :
un cycle de pompe à chaleur (10), ayant un fluide de travail, un côté haute pression et un côté basse pression, le cycle de pompe à chaleur (10) ayant :
un premier refroidisseur (12), sur le côté haute pression, pour refroidir le fluide de travail ; et
un second refroidisseur (14), sur le côté haute pression, en aval du premier refroidisseur (12), pour refroidir de manière séquentielle le fluide de travail,
un premier système de stockage thermique (30), avec un premier fluide thermique, comprenant
un premier réservoir de stockage froid (32)
un premier réservoir de stockage chaud (36) relié de manière fluidique au premier réservoir de stockage froid (32) au moyen d'une première conduite de fluide (34) traversant le premier refroidisseur (12) de sorte à permettre le chauffage du premier fluide thermique par le fluide de travail ; et
un second système de stockage thermique (40), avec un second fluide thermique, comprenant :
un second réservoir de stockage froid (42) ;
un second réservoir de stockage chaud (46) relié de manière fluidique au second réservoir de stockage froid (42) par une troisième conduite de fluide (44) traversant le second refroidisseur (14) de sorte à permettre le chauffage du second fluide thermique par le fluide de travail,
un cycle de vapeur d'eau (20) ayant :
une turbine à vapeur (21) pour détendre la vapeur ;
un premier chauffe-eau (26) en aval de la turbine à vapeur (21) ;
une chaudière (29) en aval du premier chauffe-eau (26) pour transformer l'eau du cycle en vapeur ;
une deuxième conduite de fluide (38) traversant la chaudière à vapeur (29) et reliant en outre de manière fluidique le premier réservoir de stockage chaud (36) au premier réservoir de stockage froid (32) ; et
une quatrième conduite de fluide (48) traversant le premier chauffe-eau (26) et reliant en outre de manière fluidique le second réservoir de stockage chaud (46) au second réservoir de stockage froid (42), **caractérisé par**
un élément chauffant (16), sur le côté basse pression, dans lequel la troisième conduite de fluide (44) traverse l'élément chauffant (16).

2. Système de stockage et de décharge d'énergie électrique selon la revendication 1 dans lequel la turbine à vapeur (21) est une turbine à vapeur à plusieurs étages (21) avec une conduite d'extraction (24) configurée et agencée pour extraire la vapeur de la turbine à vapeur (21) à partir d'un étage intermédiaire dans lequel la conduite d'extraction (24) est reliée à un second chauffe-eau (28) situé dans le cycle de vapeur d'eau (20) en aval du premier chauffe-eau (26) de sorte à permettre un nouveau chauffage d'eau dans le cycle de vapeur d'eau (20) avec de la vapeur d'extraction.

3. Système de stockage et de décharge d'énergie électrique selon la revendication 1 dans lequel le cycle de pompe à chaleur (10) est un cycle de pompe à chaleur (10) transcritique.

4. Système de stockage et de décharge d'énergie électrique selon la revendication 1 dans lequel le cycle de pompe à chaleur (10) est un cycle de pompe à chaleur (10) supercritique dans lequel le fluide de travail est dans un état supercritique tout au long du cycle.

5. Système de stockage et de décharge d'énergie électrique selon la revendication 1 dans lequel le premier fluide thermique est du sel fondu.

6. Système de stockage et de décharge d'énergie électrique selon la revendication 1 dans lequel le second fluide thermique est de l'eau.

7. Système de stockage et de décharge d'énergie électrique selon la revendication 6 dans lequel le second fluide thermique est de l'eau sous pression.

8. Système de stockage et de décharge d'énergie électrique selon la revendication 1 dans lequel le second fluide thermique est de l'huile.

9. Système de stockage et de décharge d'énergie électrique selon la revendication 8 dans lequel le second fluide thermique est une huile de synthèse.

10. Système de stockage et de décharge d'énergie électrique selon la revendication 8 dans lequel le second fluide thermique est une huile minérale.

11. Système de stockage et de décharge d'énergie électrique selon l'une quelconque des revendications 1 à 10, comprenant un compresseur (18) et un récupérateur (13), dans lequel le récupérateur (13) est situé sur le côté haute pression du cycle de pompe à chaleur (10) entre le premier refroidisseur (12) et le second refroidisseur (14) et sur le côté basse pression du cycle de pompe à chaleur (10) entre le compresseur (18) et l'élément chauffant (16), et dans lequel le compresseur est en amont du premier refroidisseur (12).

12. Système de stockage et de décharge d'énergie électrique selon l'une quelconque des revendications 1 à 11, comprenant un détendeur (15) entre le second refroidisseur (14) et l'élément chauffant (16).
